# EUROPEAN PATENT SPECIFICATION

(11) **EP 3 046 019 B1**
(45) Date of publication and mention of the grant of the patent: **18.03.2020**
(21) Application number: 16151717.2
(22) Date of filing: 18.01.2016
(51) Int. Cl.: G06F 3/0488

(54) **ELECTRONIC DEVICE AND OPERATING METHOD THEREOF**
ELEKTRONISCHE VORRICHTUNG UND BETRIEBSVERFAHREN DAMIT
DISPOSITIF ÉLECTRONIQUE ET SON PROCÉDÉ DE FONCTIONNEMENT

(30) Priority: 16.01.2015 KR 20150007880
(43) Date of publication of application: 20.07.2016
(73) Proprietor: Samsung Electronics Co., Ltd., Gyeonggi-do 16677 (KR)
(72) Inventor: Lee, Sungsik, Seoul (KR); Lee, Sukjae, Seoul (KR); Chung, Chongyoon, Seoul (KR)
(74) Representative: Nederlandsch Octrooibureau

(56) References cited:
- WO-A1-2013/049910
- WO-A1-2016/034055
- US-A1- 2012 182 239
- US-A1- 2012 304 133
- Anonymous: "Samsung Galaxy Note Edge Gets a U.S. Release Date", Time Magazine, 10 December 2014 (2014-12-10), XP055568891, Retrieved from the Internet: URL:https://web.archive.org/web/2014121010 5818/http://time.com/3554604/samsung-galax y-note-edge/ [retrieved on 2019-03-13]

## Description

### TECHNICAL FIELD

The present disclosure relates to an electronic device and an operating method thereof. More specifically, the present disclosure relates to an electronic device that has a display that includes a main area and an edge area extending from the main area, and a method of operating the same.

### BACKGROUND

In general, electronic devices have various functions added thereto and perform these functions in combination. For example, electronic devices may perform mobile communication functions, data communication functions, data output functions, data storage functions, image photographing functions, audio recording functions, etc. Such electronic devices include a display and an input device. In this case, the display and the input device may be coupled to each other so as to be implemented as a touchscreen. Further, the electronic devices may output display screens through the touchscreen. In addition, the electronic devices may control the display screens by detecting touches on the touchscreen.

However, the electronic devices do not provide various interactions for various touch motions. Due to this, the electronic devices have difficulty in controlling the display screens in response to various touch motions. Accordingly, the use efficiency of the electronic devices and user convenience may be degraded. US 2012/304133 A1 discloses a device with a flat touch screen. A touch dragged from an edge portion to the main area of the screen is used to invoke a new window or screen.

The above information is presented as background information only to assist with an understanding of the present disclosure. No determination has been made, and no assertion is made, as to whether any of the above might be applicable as prior art with regard to the present disclosure. The invention is defined by the independent claims. Further aspects of the invention are outlined in the dependent claims. When the term embodiment is used for describing unclaimed combinations of features, the term has to be understood as referring to examples useful for understanding the present invention.

### SUMMARY

Aspects of the present disclosure are to address at least the above-mentioned problems and/or disadvantages and to provide at least the advantages described below. Accordingly, an aspect of the present disclosure is to provide an electronic device that has a display that includes a main area and an edge area extending from the main area, and a method of operating the same.

In accordance with an aspect of the present disclosure, a method of operating an electronic device is provided. The method includes outputting a display screen on a display that has a main area and an edge area extending from an edge of the main area, when detecting a touch, determining a location of the touch in one of the main area and the edge area, and controlling the display screen according to the location of the touch.

In accordance with another aspect of the present disclosure, an electronic device is provided. The electronic device includes a display including a main area and an edge area extending from an edge of the main area, and configured to output a display screen in at least one of the main area and the edge area, an input device configured to detect a touch, a determination unit configured to determine a location of the touch in one of the main area and the edge area when the touch is detected, and a processor configured to control the display screen according to the location of the touch.

In the screen control device and method of the present disclosure, the display includes not only the main area but also the edge area. This can create a touch motion that is generated from not only the main area but also the edge area in the screen control device. Accordingly, the screen control device can provide various interactions for various touch motions. Namely, the screen control device can control the display screen in response to various touch motions. Therefore, the screen control device can enhance use efficiency and user convenience of the electronic device.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a block diagram of an electronic device according to an embodiment of the present disclosure;
FIG. 2 illustrates implemented examples of the electronic device according to an embodiment of the present disclosure;
FIG. 3 is a flowchart illustrating a procedure of a screen control method according to an embodiment of the present disclosure;
FIG. 4 is a flowchart illustrating a first example of the procedure of determining the touch event corresponding to the main area and the edge area in FIG. 3 according to an embodiment of the present disclosure;
FIG. 5 is a flowchart illustrating a second example of the procedure of determining the touch event corresponding to the main area and the edge area in FIG. 3 according to an embodiment of the present disclosure;
FIG. 6 is a flowchart illustrating a third example of the procedure of determining the touch event corresponding to the main area and the edge area in FIG. 3 according to an embodiment of the present disclosure;
FIG. 7 is a flowchart illustrating a fourth example of the procedure of determining the touch event corresponding to the main area and the edge area in FIG. 3 according to an embodiment of the present disclosure;
FIG. 8 is a flowchart illustrating a fifth example of the procedure of determining the touch event corresponding to the main area and the edge area in FIG. 3 according to an embodiment of the present disclosure; and
FIGS. 9A to 30B illustrate examples for explaining the screen control method according to various embodiments of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims.

It is to be understood that the singular forms "a," "an," and "the" include plural referents unless the context clearly dictates otherwise. Thus, for example, reference to "a component surface" includes reference to one or more of such surfaces.

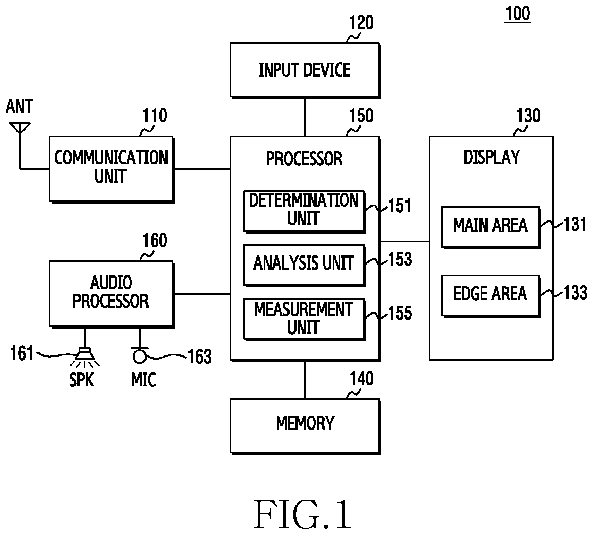

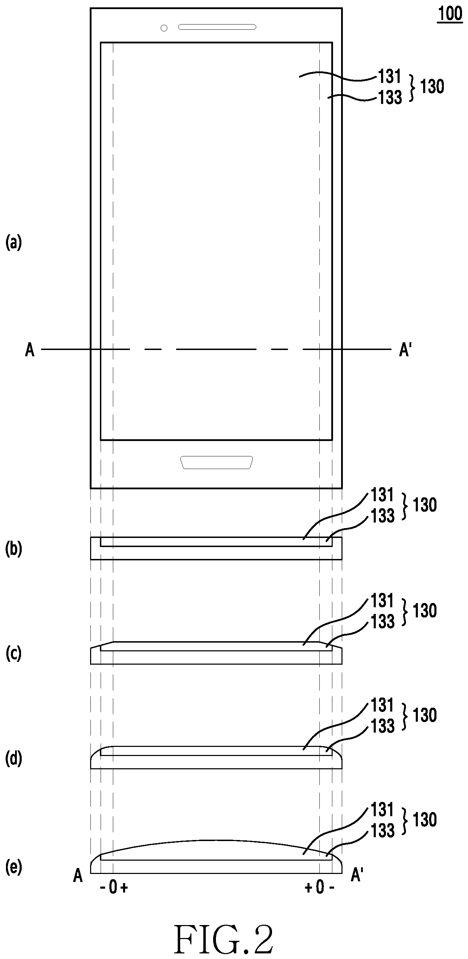

FIG. 1 is a block diagram of an electronic device according to an embodiment of the present disclosure. FIG. 2 illustrates implemented examples of the electronic device according to an embodiment of the present disclosure. Here, view (a) of FIG. 2 is a plan view of the electronic device, and views (b) to (e) are cross-sectional views taken along line A-A' of view (a) of FIG. 2.

Referring to FIG. 1, the electronic device 100 of this embodiment of the present disclosure includes a communication unit 110, an input device 120, a display 130, a memory 140, a processor 150, and an audio processor 160.

The communication unit 110 performs communication in the electronic device 100. In this case, the communication unit 110 may communicate with an external device (not illustrated) in various communication schemes. Here, the communication unit 110 may perform at least one of wireless communication and wired communication. To this end, the communication unit 110 may connect to at least one of a mobile communication network and a data communication network. Alternatively, the communication unit 110 may perform short range communication. For example, the external device may include an electronic device, a base station, a server, and a satellite. The communication schemes may include long term evolution (LTE), wideband code division multiple access (WCDMA), global system for mobile communications (GSM), Wi-Fi, Bluetooth, and near field communications (NFC).

The input device 120 generates input data in the electronic device 100. In this case, the input device 120 may generate the input data in response to a user input of the electronic device 100. Further, the input device 120 may include at least one input means. The input device 120 may include a key pad, a dome switch, a physical button, a touch panel, a jog & shuttle, and a sensor.

The display 130 outputs a display screen. Here, the display screen may include at least one of an image and a text. The display 130 may include a liquid crystal display (LCD), a light emitting diode (LED) display, an organic LED (OLED) display, a micro electro mechanical system (MEMS) display, or an electronic paper display. Here, the display 130 may include a plurality of light emitting diodes. Further, the display 130 may be coupled with the input device 120 so as to be implemented as a touchscreen.

As illustrated in view (a) of FIG. 2, the display 130 may include a main area 131 and an edge area 133. In this case, the main area 131 and the edge area 133 may output a display screen. Namely, the display screen may be output in parts by the main area 131 and the edge area 133. Alternatively, the main area 131 may output the whole display screen. In this case, the edge area 133 may output color light. The main area 131 is disposed on the front side of the electronic device 100. The edge area 133 extends from an edge of the main area 131. Namely, the edge area 133 may extend from at least one of the upper, lower, left and right sides of the main area 131. Here, the edge area 133 may be integrally formed with the main area 131.

As illustrated in view (b) or (c) of FIG. 2, the main area 131 and the edge area 133 may be formed of a flat surface. Here, as illustrated in view (b) of FIG. 2, the main area 131 and the edge area 133 may be disposed on the same plane. In this way, the edge area 133 may be disposed on the front side of the electronic device 100. Alternatively, as illustrated in view (c) of FIG. 2, the edge area 133 may be inclined with respect to the main area 131. In other words, the edge area 133 may extend from the main area 131 toward the rear side of the electronic device 100. In this way, the edge area 133 may be disposed on the lateral side of the electronic device 100.

Meanwhile, as illustrated in view (d) or (e) of FIG. 2, at least one of the main area 131 and the edge area 133 may be formed of a curved surface. Here, as illustrated in view (d) of FIG. 2, the main area 131 may be formed of a flat plane, and the edge area 133 may be formed of a curved surface. Alternatively, although not illustrated, the main area 131 may be formed of a curved surface, and the edge area 133 may be formed of a flat plane. In another case, as illustrated in view (e) of FIG. 2, the main area 131 and the edge area 133 may be formed of a single curved surface. Alternatively, although not illustrated, the main area 131 and the edge area 133 may be formed of different curved surfaces. In this way, the edge area 133 may be inclined with respect to the main area 131. In other words, the edge area 133 may extend from the main area 131 toward the rear side of the electronic device 100. The edge area 133 may be disposed on the lateral side of the electronic device 100.

To this end, the display 130 may be manufactured to have flexibility and may then be bent. In this case, the display 130 may be partially bent. Here, the display 130 is bent or curved so that the edge area 133 may be inclined with respect to the main area 131. Specifically, the display 130 may be bent or curved with respect to the border between the main area 131 and the edge area 133. Further, as at least one of the main area 131 and the edge area 133 is curved, the display 130 may be formed of a curved surface. Specifically, one of the main area 131 and the edge area 133 may be curved, and the main area 131 and the edge area 133 may also be curved to have different curvatures. Alternatively, the display 130 may be bent on the whole. Here, the main area 131 and the edge area 133 may be integrally curved. In other words, the main area 131 and the edge area 133 may be curved to have the same curvature.

The memory 140 stores operating programs of the electronic device 100. In this case, the memory 140 may store a program for controlling a display screen according to a user input. Further, the memory 140 stores data generated while the programs are executed. In addition, the memory 140 stores functions for controlling a display screen. In this case, the memory 140 may match touch events and the functions and then store them.

The processor 150 controls an overall operation in the electronic device 100. In this case, the processor 150 performs various functions. Further, the processor 150 controls the display 130 to output a display screen. In addition, the processor 150 controls a display screen. Here, the processor 150 may control the main area 131 and the edge area 133 separately, or by making an association therebetween. Besides, the processor 150 may detect a user input through the input device 120 to correspond to the main area 131 and the edge area 133. Namely, the processor 150 may detect a touch through the input device 120. In addition, the processor 150 may determine a touch event. Here, the processor 150 may determine the touch event according to at least one of a touch location and a touch motion. In this way, the processor 150 may control a display screen in response to the touch event. The processor 150 may include a determination unit 151, an analysis unit 153, and a measurement unit 155. Accordingly, the processor 150 may perform any of the operations described herein as being performed by the determination unit 151, the analysis unit 153, and the measurement unit 155. Further, one or more of the determination unit 151, the analysis unit 153, and the measurement unit 155 may be included in another processor or as at least one component separate from the processor 150.

The determination unit 151 may detect the location of a touch. Here, the determination unit 151 may detect the detection time of the touch location, together with the touch location. The determination unit 151 may detect the touch location as coordinates. For example, the determination unit 151 may detect a plurality of coordinates in the area of the touch and may select one of the coordinates to determine the same as the touch location. To this end, if there is a space in the area of the touch, the determination unit 151 may divide the area of the touch. Further, the determination unit 151 may detect the touch location as positive (+) coordinates in the main area 131 and as negative (-) coordinates in the edge area 133. In this way, the processor 150 may control a display screen in response to the touch location. In this case, the determination unit 151 may determine an initial touch location on the display 130. Here, the initial touch location may represent the location where the touch was first generated. Namely, the determination unit 151 may determine the initial touch location in one of the main area 131 and the edge area 133. In this way, the processor 150 may control a display screen according to the initial touch location.

The analysis unit 153 may analyze a touch location. In this case, the analysis unit 153 may identify the detection time of the touch location. Further, the analysis unit 153 may detect the number of touch locations based on the detection time. Here, the analysis unit 153 may identify a single touch location and may also identify a plurality of touch locations based on the detection time. Namely, a plurality of simultaneously generated touch locations may be detected by the analysis unit 153. In this way, the processor 150 may control a display screen according to the number of touch locations. Besides, the analysis unit 153 may analyze the arrangement structure of the plurality of touch locations. In this way, the processor 150 may control a display screen according to the arrangement structure of the plurality of touch locations.

The measurement unit 155 may track a touch motion. In this case, in response to the movement of the touch, the measurement unit 155 may measure the moving direction, the moving path, and the moving distance of the touch. In this way, the processor 150 may control a display screen according to the movement of the touch. Further, the measurement unit 155 may measure the detection time of the touch. Here, the detection time of the touch may represent the maintenance time of the touch at the same location. In this way, the processor 150 may control a display screen according to the detection time of the touch. In addition, the measurement unit 155 may measure the number of repeated touches. Here, the number of repeated touches may represent the number of times that a touch is detected at the same location. In this way, the processor 150 may control a display screen according to the number of repeated touches.

The audio processor 160 processes an audio signal. In this case, the audio processor 160 includes a speaker (SPK) 161 and a microphone (MIC) 163. Namely, the audio processor 160 may reproduce an audio signal output from the processor 150 through the SPK 161. Further, the audio processor 160 may forward, to the processor 150, an audio signal generated by the MIC 163.

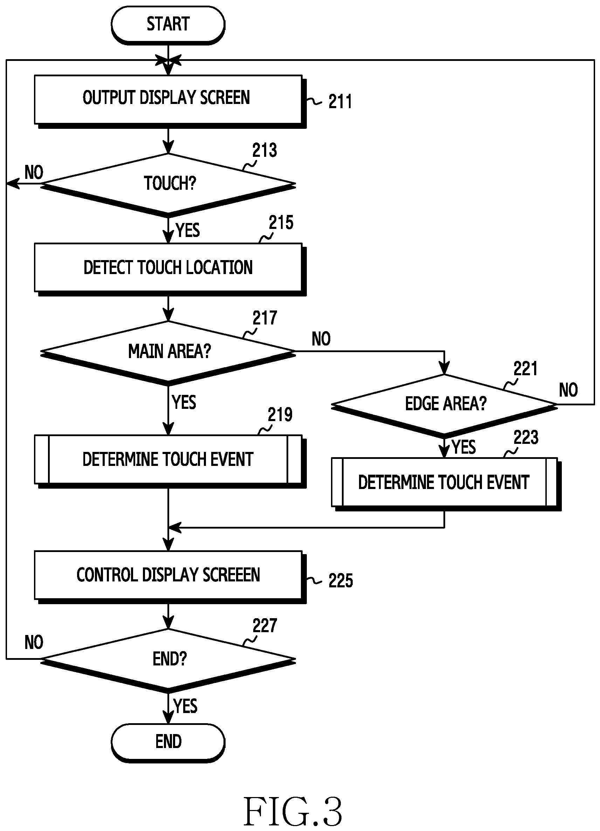

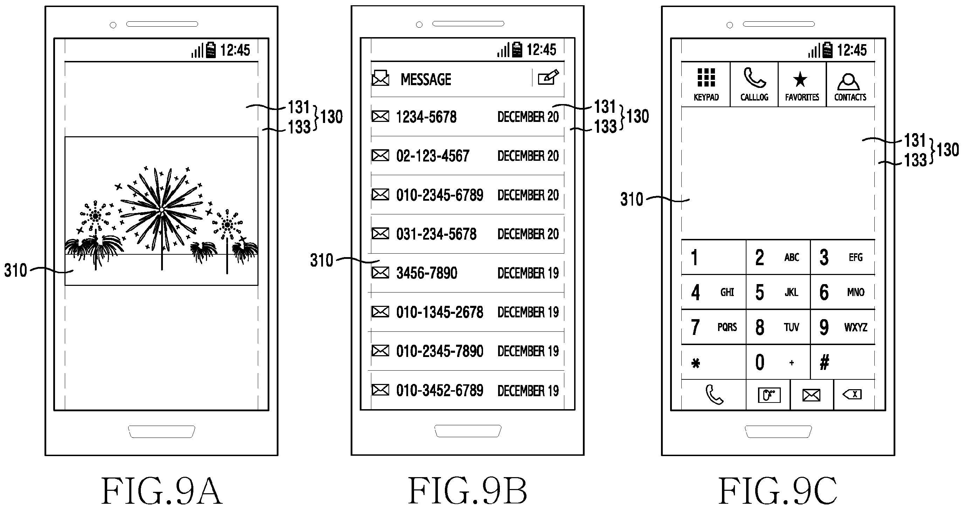

FIG. 3 is a flowchart illustrating a procedure of a screen control method according to an embodiment of the present disclosure. FIGS. 9A to 30B illustrate examples for explaining the screen control method according to various embodiments of the present disclosure.

Referring to FIG. 3, the procedure of the screen control method, according to this embodiment of the present disclosure, starts by outputting a display screen 310 by the processor 150 in operation 211. In this case, the processor 150 outputs the display screen 310 through the display 130 to correspond to a current function. Here, the processor 150 may activate both the main area 131 and the edge area 133. Further, the processor 150 may output split screens, into which the display screen 310 is split, in the main area 131 and the edge area 133. Alternatively, the processor 150 may output the display screen 310 in the main area 131. Further, the processor 150 may activate the input device 120 to correspond to the main area 131 and the edge area 133.

For example, the processor 150 may output the display screen 310 as illustrated in FIGS. 9A to 9C. In this case, the processor 150 may display an image on the display screen 310 as illustrated in FIG. 9A in response to an image display function. Alternatively, the processor 150 may display a list of received messages on the display screen 310 as illustrated in FIG. 9B in response to a received-message display function. Here, if the received-message display function is executed while the image display function is being performed, the processor 150 may display the list of received messages on the display screen 310 as illustrated in FIG. 9B. In another case, the processor 150 may display a numeric keypad for call origination on the display screen 310 as illustrated in FIG. 9C in response to a call origination function. Here, if the call origination function is executed while the received-message display function is being performed, the processor 150 may display the numeric keypad for call origination on the display screen 310 as illustrated in FIG. 9C.

Next, when a touch is generated, the processor 150 detects the touch in operation 213. In this case, the processor 150 may detect the touch through the input device 120. Further, the processor 150 detects the location of the touch in operation 215. Namely, the processor 150 detects an initial touch location. In this case, the determination unit 151 may detect the location of the touch. Here, the determination unit 151 may detect the detection time of the touch location, together with the touch location.

In this case, the determination unit 151 may detect the touch location as coordinates. For example, the determination unit 151 may detect a plurality of coordinates in the area of the touch and may select one of the coordinates to determine the same as the touch location. Further, the determination unit 151 may detect the touch location as positive (+) coordinates in the main area 131 and as negative (-) coordinates in the edge area 133.

Here, the processor 150 may detect a single touch location and may also simultaneously detect a plurality of touch locations. Namely, if there is a space in the area of the touch, the determination unit 151 may divide the touch area into a plurality of partial areas based on the space. The determination unit 151 may detect touch locations in the respective partial areas. In other words, the determination unit 151 may detect each of the touch locations as coordinates.

Then, in operation 217, the processor 150 determines whether the touch location is within the main area 131. Namely, the processor 150 determines whether the initial touch location is within the main area 131. When the determination result in operation 217 shows that the touch location is within the main area 131, the processor 150 determines a touch event in operation 219. Namely, the processor 150 determines the touch event to correspond to the main area 131.

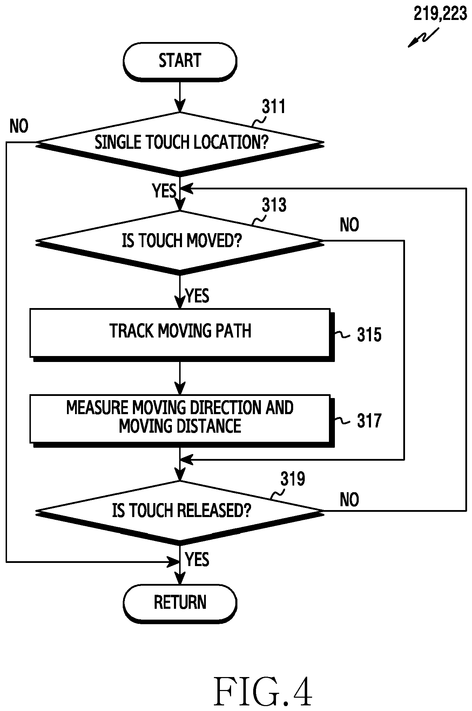

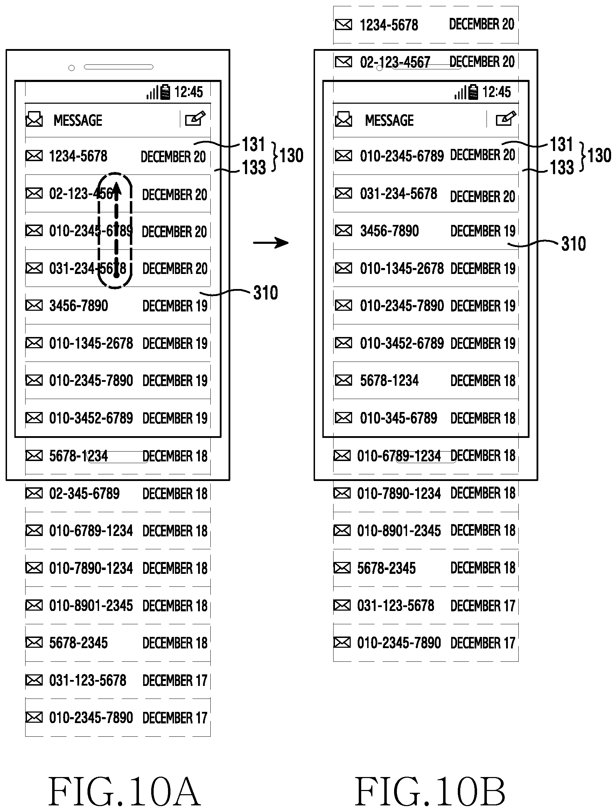

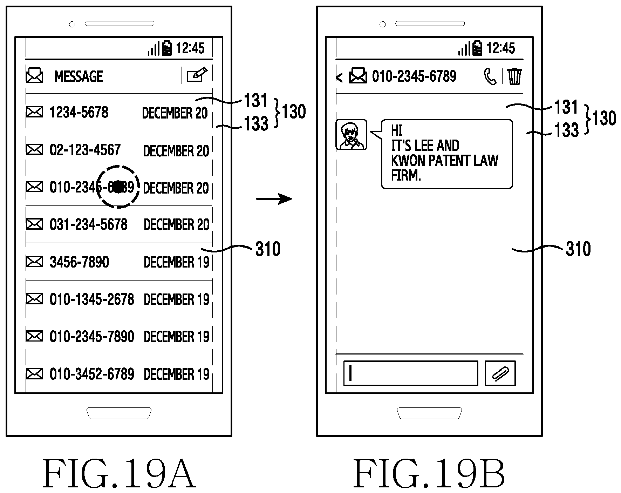

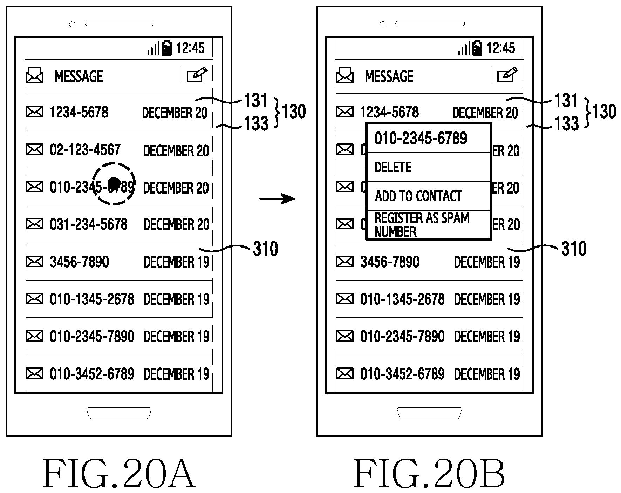

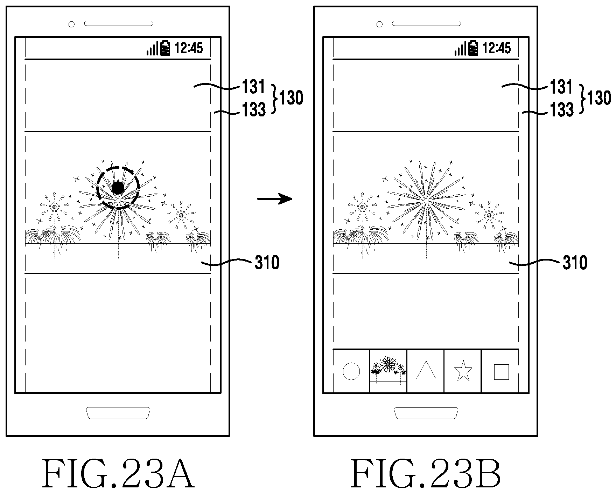

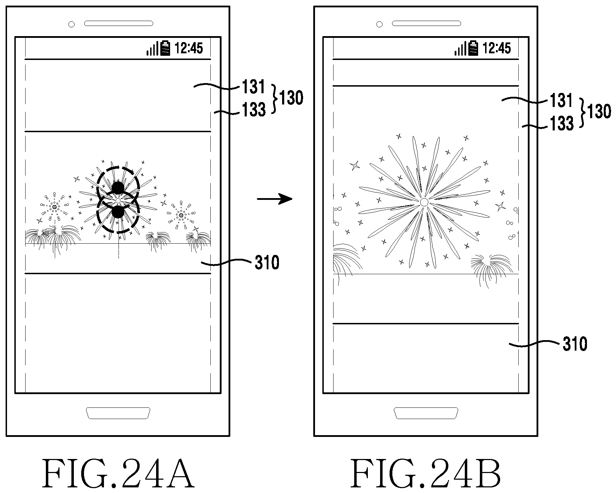

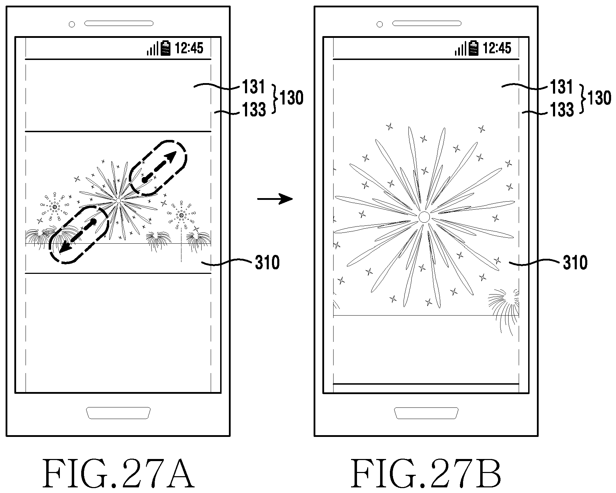

In this case, the processor 150 may determine the touch event according to at least one of the touch location and the touch motion. For example, the processor 150 may determine a touch event from the movement of a touch as illustrated in FIGS. 10A and 10B, 11A and 11B, or 12A and 12B. Alternatively, the processor 150 may determine a touch event from the detection time of a touch as illustrated in FIGS. 19A and 19B, or 20A and 20B. In another case, the processor 150 may determine a touch event from the number of repeated touches as illustrated in FIGS. 23A and 23B, or 24A and 23B. In yet another case, the processor 150 may determine a touch event from the number of touch locations as illustrated in FIGS. 27A and 27B. To this end, the analysis unit 153 may analyze the touch location. Further, the measurement unit 155 may track the touch motion. Here, the procedure of determining the touch event by the processor 150 to correspond to the main area 131 will be described below in more detail with reference to FIGS. 4 to 7.

Meanwhile, when the determination result in operation 217 shows that the touch location is not within the main area 131, the processor 150 determines whether the touch location is within the edge area 133 in operation 221. Namely, the processor 150 determines whether the initial touch location is within the edge area 133. When the determination result in operation 221 shows that the touch location is within the edge area 133, the processor 150 determines a touch event in operation 223. Namely, the processor 150 determines the touch event to correspond to the edge area 133.

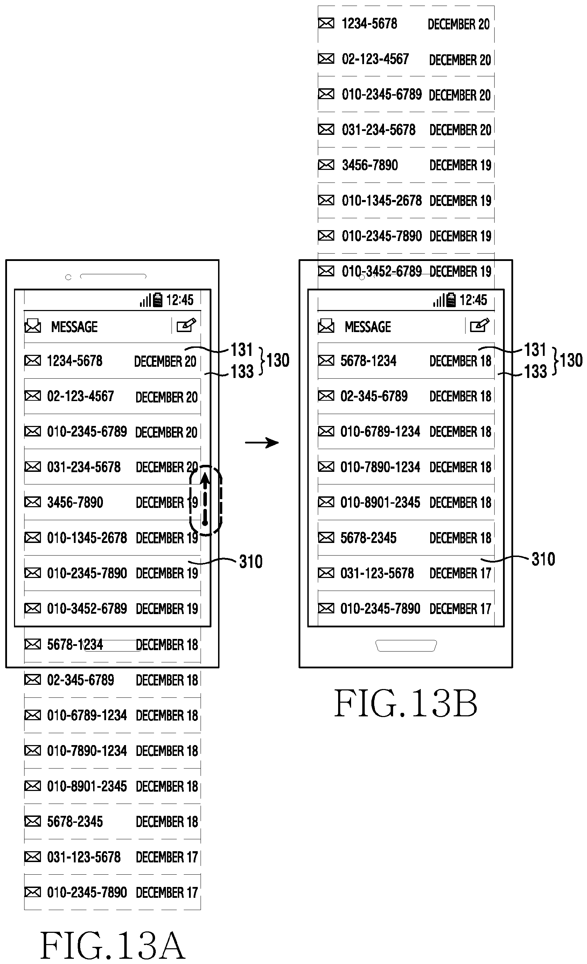

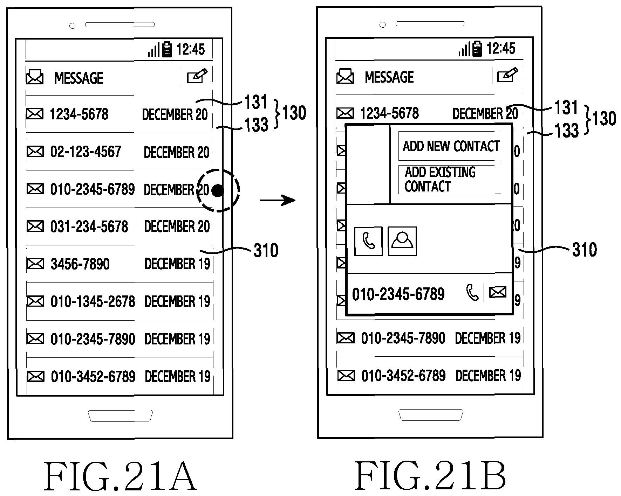

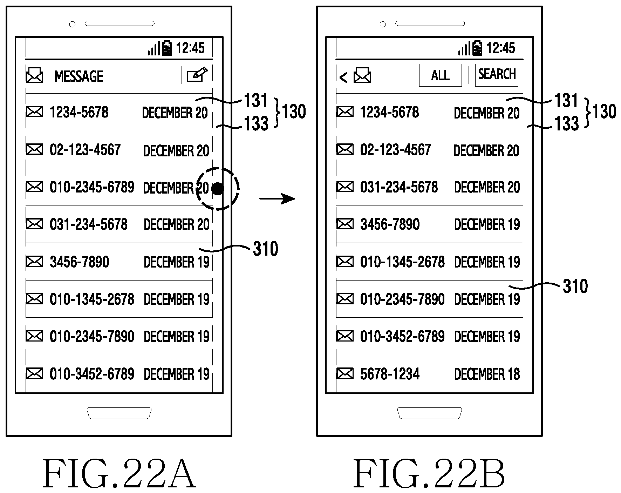

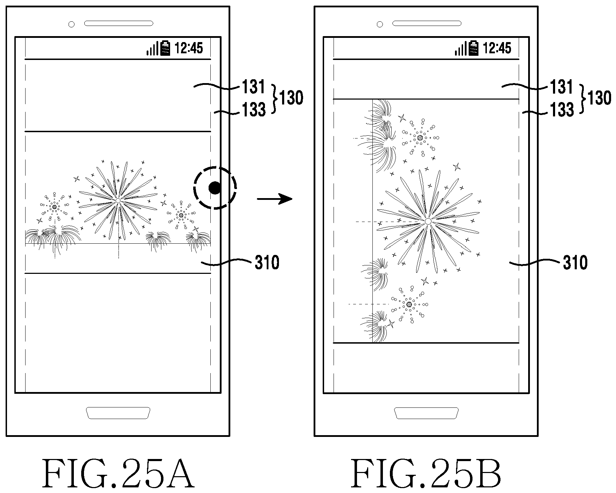

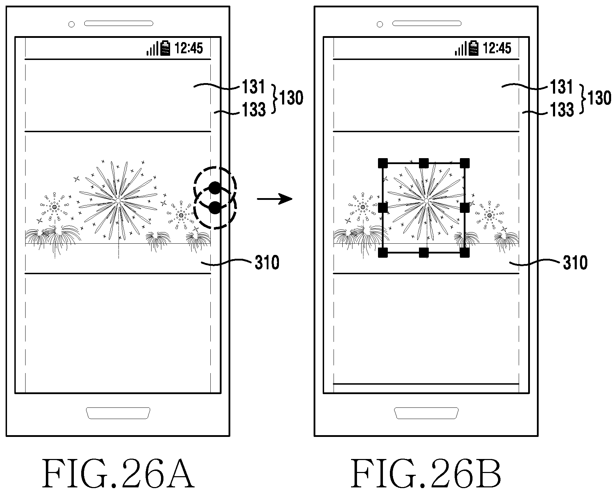

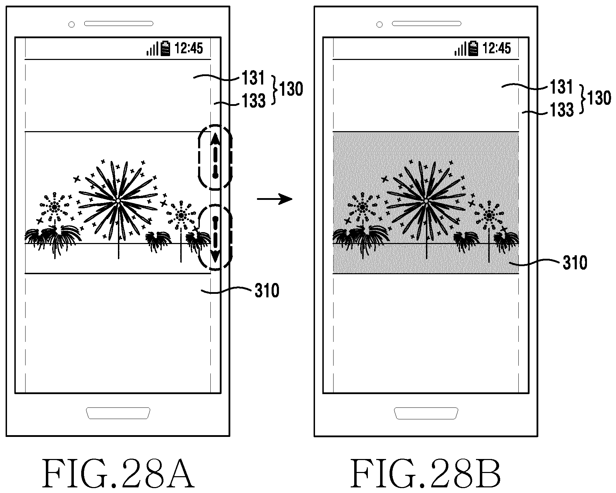

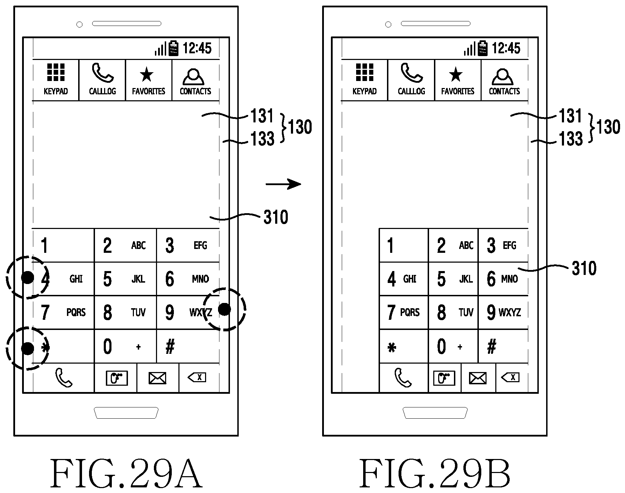

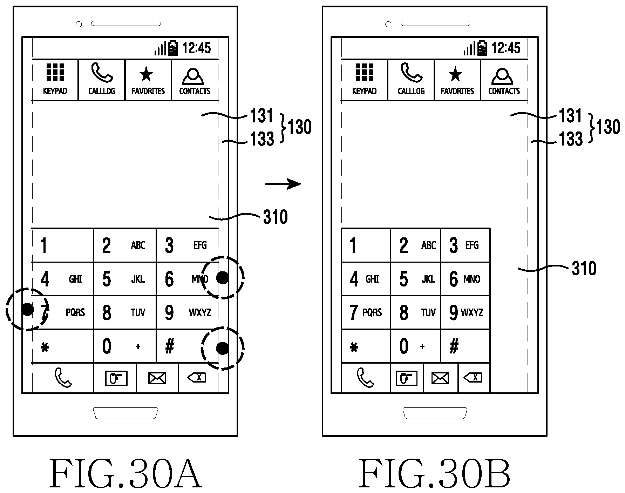

In this case, the processor 150 may determine the touch event according to at least one of the touch location and the touch motion. For example, the processor 150 may determine a touch event from the movement of a touch as illustrated in FIGS. 13A and 13B, 14A and 14B, 15A and 15B, 16A and 16B, 17A and 17B, or 18A and 18B. Alternatively, the processor 150 may determine a touch event from the detection time of a touch as illustrated in FIGS. 21A and 21B, or 22A and 22B. In another case, the processor 150 may determine a touch event from the number of repeated touches as illustrated in FIGS. 25A and 25B, or 26A and 26B. In yet another case, the processor 150 may determine a touch event from the number of touch locations as illustrated in FIGS. 28A and 28B. In yet another case, the processor 150 may determine a touch event from the arrangement structure of touch locations as illustrated in FIGS. 29A and 29B, or 30A and 30B. To this end, the analysis unit 153 may analyze the touch location. Further, the measurement unit 155 may track the touch motion. Here, the procedure of determining the touch event by the processor 150 to correspond to the edge area 133 will be described below in more detail with reference to FIGS. 4 to 8.

Meanwhile, when the determination result in operation 221 shows that the touch location is not within the edge area 133, the processor 150 returns to operation 211. Thereafter, the processor 150 may repeatedly perform at least some of the operations 211 to 223.

FIG. 4 is a flowchart illustrating a first example of the procedure of determining the touch event corresponding to the main area and the edge area in FIG. 3 according to an embodiment of the present disclosure. A touch event determination procedure when a touch moves from a single touch location as illustrated in FIGS. 10A and 10B, 11A and 11B, 12A and 12B, 13A and 13B, 14A and 14B, 15A and 15B, 16A and 16B, 17A and 17B, or 18A and 18B will be described below.

Referring to FIG. 4, the touch event determination procedure, according to this embodiment of the present disclosure, starts by identifying a single touch location by the processor 150 in operation 311. In this case, the analysis unit 153 may identify the detection time of the touch location. Further, the analysis unit 153 may detect the number of touch locations based on the detection time. Here, the analysis unit 153 may identify the single touch location based on the detection time.

Next, when the touch moves, the processor 150 detects the movement of the touch in operation 313. In this case, the determination unit 151 may continue to detect the location of the touch. Here, the determination unit 151 may detect the detection time of the touch location, together with the touch location. The analysis unit 153 may analyze the touch location. Here, the analysis unit 153 may determine whether the touch location changes as the detection time changes. Further, when the touch location changes, the analysis unit 153 may determine the movement of the touch.

Next, in operation 315, the processor 150 tracks the moving path of the touch. In this case, the measurement unit 155 may track the moving path of the touch. Here, the measurement unit 155 may track the change of the touch location as the detection time changes. The processor 150 may measure the moving direction and the moving distance of the touch in operation 317. In this case, the measurement unit 155 may measure the moving direction and the moving distance of the touch along the moving path of the touch. In this way, the processor 150 may determine a touch event from the moving path, the moving direction, and the moving distance of the touch.

Next, when the touch is released, the processor 150 detects the release of the touch in operation 319. Further, the processor 150 ends the touch event determination procedure and returns to FIG. 3.

Meanwhile, when the release of the touch is not detected in operation 319, the processor 150 returns to operation 313. Then, the processor 150 may repeatedly perform at least some of the operations 313 to 319. In this way, the processor 150 may update the touch event. Namely, the processor 150 may change the touch event as at least one of the moving path, the moving direction, and the moving distance of the touch changes.

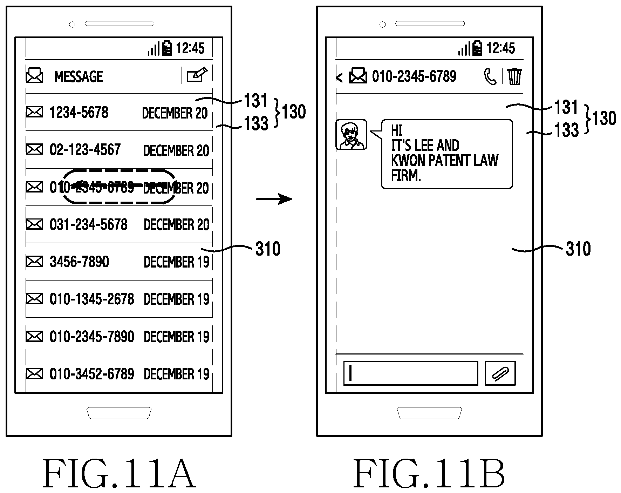

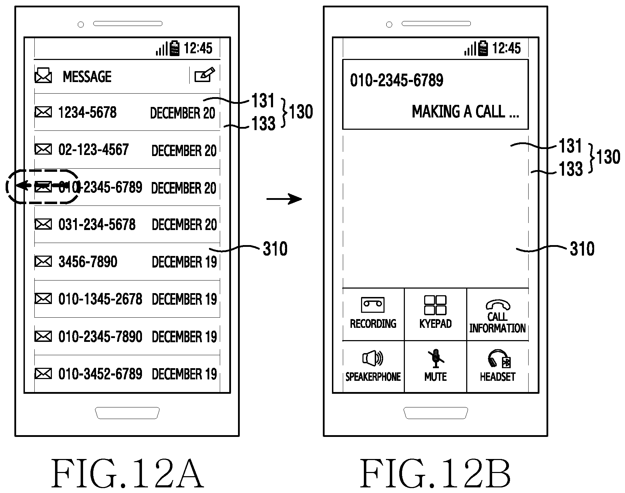

In cases where the initial touch location is within the main area 131, the touch may move from the main area 131. Here, the touch may move within the main area 131. For example, the touch may move upward within the main area 131 as illustrated in FIG. 10A. Alternatively, although not illustrated, the touch may move downward within the main area 131. In another case, the touch may move leftward within the main area 131 as illustrated in FIG. 11A. In yet another case, although not illustrated, the touch may move rightward within the main area 131. Meanwhile, the touch may move from the main area 131 to the edge area 133. For example, as illustrated in FIG. 12A, the touch may move leftward from the main area 131 to reach the edge area 133. In yet another case, although not illustrated, the touch may move rightward from the main area 131 to reach the edge area 133.

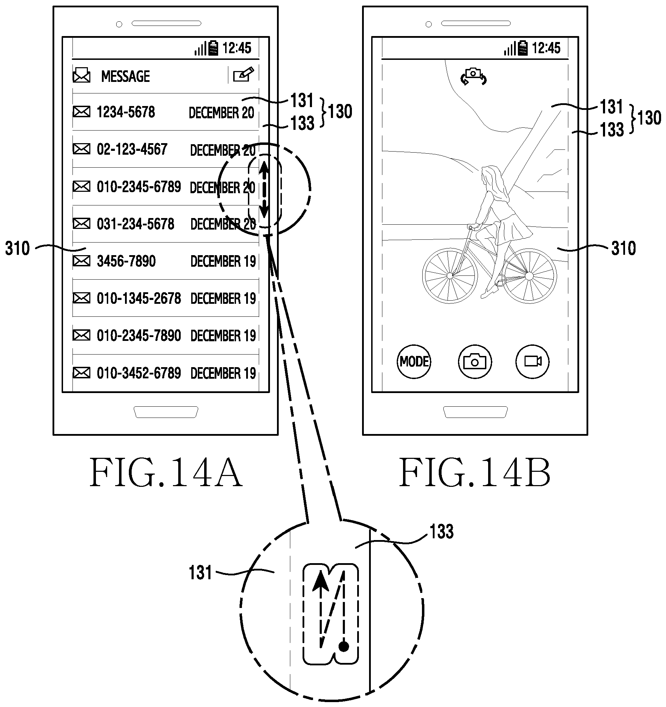

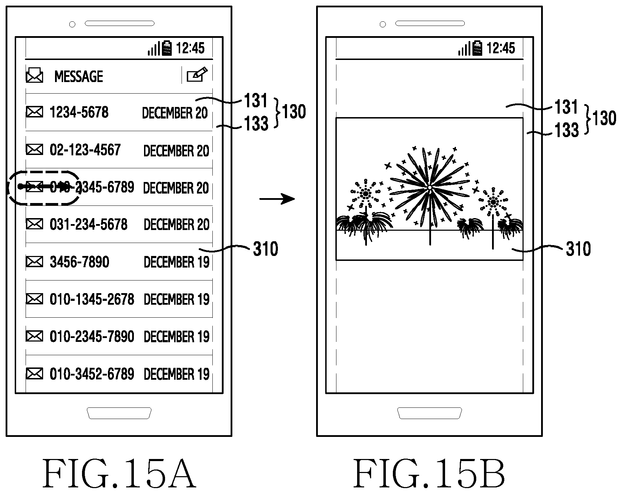

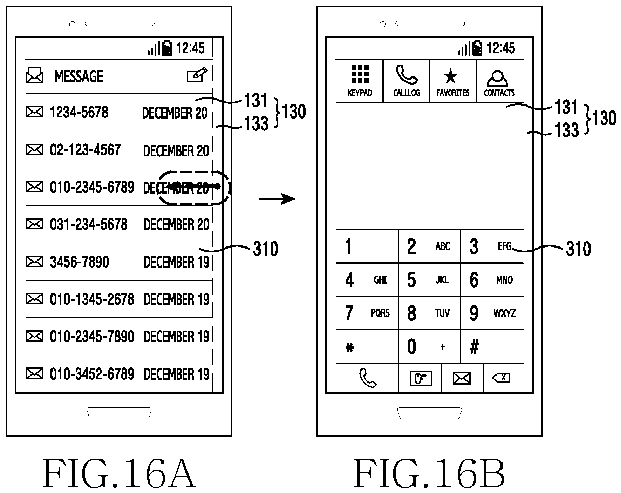

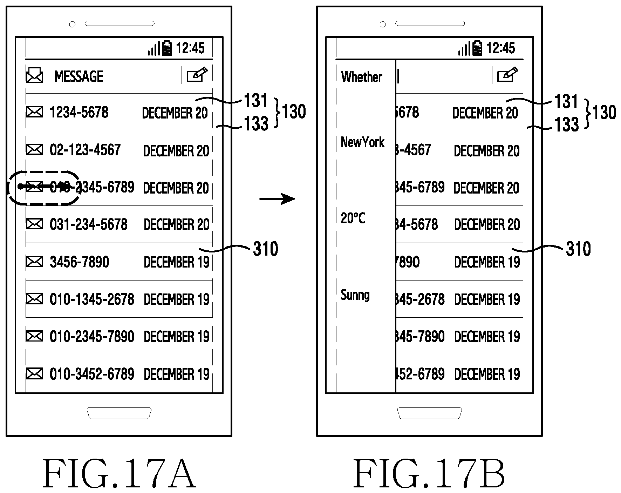

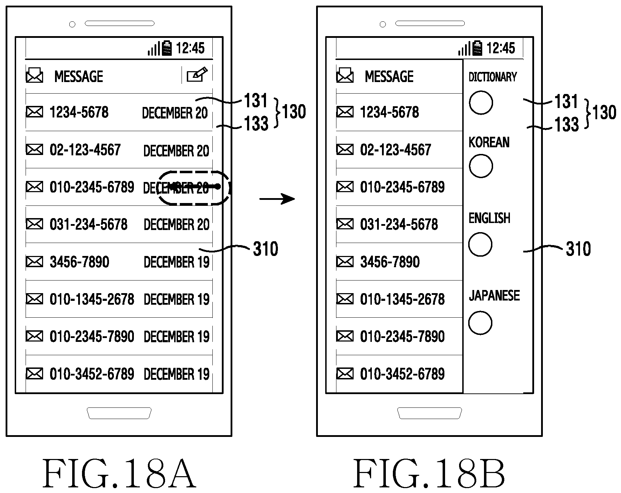

Meanwhile, in cases where the initial touch location is within the edge area 133, the touch may move from the edge area 133. Here, the touch may move within the edge area 133. For example, the touch may move upward within the edge area 133 as illustrated in FIG. 13A. Alternatively, although not illustrated, the touch may move downward within the edge area 133. In another case, the touch may move upward and downward within the edge area 133 as illustrated in FIG. 14A. Meanwhile, the touch may move from the edge area 133 to the main area 131. For example, as illustrated in FIG. 15A or 17A, the touch may move rightward from the edge area 133 to reach the main area 131. In yet another case, as illustrated in FIG. 16A or 18A, the touch may move leftward from the edge area 133 to reach the main area 131.

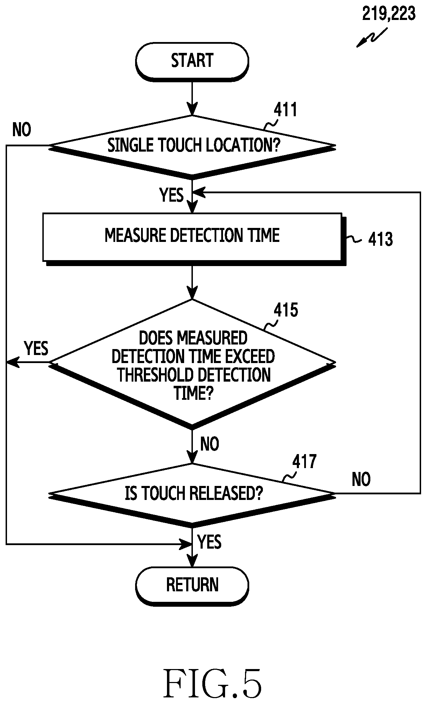

FIG. 5 is a flowchart illustrating a second example of the procedure of determining the touch event corresponding to the main area and the edge area in FIG. 3 according to an embodiment of the present disclosure. A touch event determination procedure when a touch is maintained at a single touch location as illustrated in FIGS. 19A and 19B, 20A and 20B, 21A and 21B, or 22A and 22B will be described below.

Referring to FIG. 5, the touch event determination procedure, according to this embodiment of the present disclosure, starts by identifying a single touch location by the processor 150 in operation 411. In this case, the analysis unit 153 may identify the detection time of the touch location. Further, the analysis unit 153 may detect the number of touch locations based on the detection time. Here, the analysis unit 153 may identify the single touch location based on the detection time.

Next, the processor 150 measures the detection time of the touch in operation 413. In this case, the determination unit 151 may continue to detect the location of the touch. Here, the determination unit 151 may detect the detection time of the touch location, together with the touch location. The analysis unit 153 may analyze the touch location. Here, the analysis unit 153 may determine whether the touch location changes as the detection time changes. Further, when the touch location does not change, the analysis unit 153 may determine that the touch is maintained at the same touch location. Further, the measurement unit 155 may measure the detection time of the touch. Namely, the measurement unit 155 may measure the maintenance time of the touch from the change of the detection time at the same touch location. In this way, the processor 150 may determine a touch event from the detection time of the touch.

Next, the processor 150 compares the detection time of the touch with a threshold detection time in operation 415. Namely, the processor 150 determines whether the detection time of the touch exceeds the threshold detection time. Here, the memory 140 may store the threshold detection time.

Next, when the determination result in operation 415 shows that the detection time of the touch does not exceed the threshold detection time, and the touch is released, the processor 150 detects the release of the touch in operation 417. The processor 150 ends the touch event determination procedure and returns to FIG. 3. If the release of the touch is not detected in operation 417, the processor 150 returns to operation 413. Then, the processor 150 may repeatedly perform at least some of the operations 413 to 417.

Meanwhile, when the determination result in operation 415 shows that the detection time of the touch exceeds the threshold detection time, the processor 150 ends the touch event determination procedure and returns to FIG. 3. In this case, the processor 150 may update the touch event. Namely, as the detection time of the touch changes, the processor 150 may change the touch event.

In cases where the initial touch location is within the main area 131, the touch may be maintained at the initial touch location within the main area 131. For example, as illustrated in FIG. 19A, the touch may be released after the touch is maintained for the threshold detection time or less. Alternatively, as illustrated in FIG. 20A, the touch may be maintained for the threshold detection time or more.

Meanwhile, in cases where the initial touch location is within the edge area 133, the touch may be maintained at the initial touch location within the edge area 133. For example, as illustrated in FIG. 21A, the touch may be maintained for the threshold detection time or less. Alternatively, as illustrated in FIG. 22A, the touch may be maintained for the threshold detection time or more.

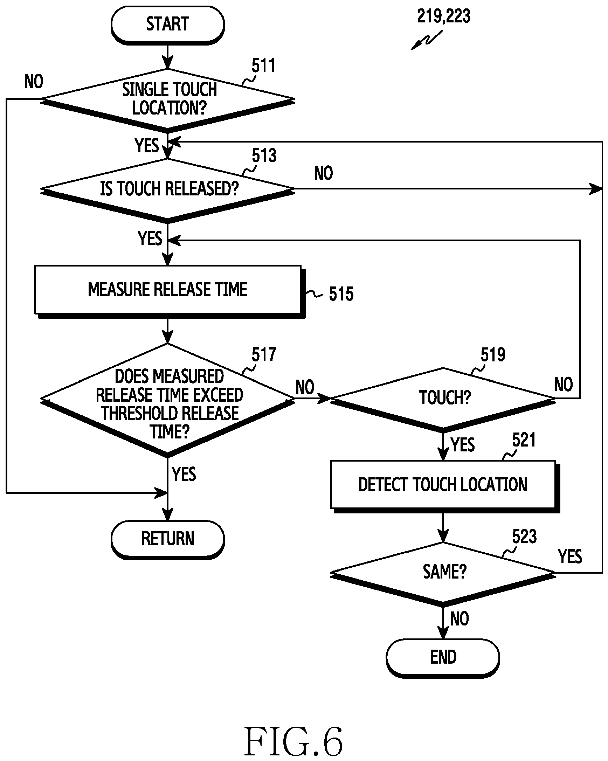

FIG. 6 is a flowchart illustrating a third example of the procedure of determining the touch event corresponding to the main area and the edge area in FIG. 3 according to an embodiment of the present disclosure. A touch event determination procedure when a touch is maintained at a single touch location as illustrated in FIGS. 23A and 23B, 24A and 25B, 25A and 25B, or 26A and 26B will be described below.

Referring to FIG. 6, the touch event determination procedure, according to this embodiment of the present disclosure, starts by identifying a single touch location by the processor 150 in operation 511. In this case, the analysis unit 153 may identify the detection time of the touch location. Further, the analysis unit 153 may detect the number of touch locations based on the detection time. Here, the analysis unit 153 may identify the single touch location based on the detection time.

Next, when the touch is released, the processor 150 detects the release of the touch in operation 513. The processor 150 measures the release time of the touch in operation 515. In this case, the measurement unit 155 may measure the release time of the touch. In this way, the processor 150 may determine a touch event from the number of repeated touches.

Next, the processor 150 compares the release time of the touch with a threshold release time in operation 517. Namely, the processor 150 determines whether the release time of the touch exceeds the threshold release time. Here, the memory 140 may store the threshold release time.

Next, when the determination result in operation 517 shows that the release time of the touch exceeds the threshold release time, the processor 150 ends the touch event determination procedure and returns to FIG. 3.

Meanwhile, when the determination result in operation 517 shows that the release time of the touch does not exceed the threshold release time, and the touch is released, the processor 150 detects the release of the touch in operation 519. In this case, the processor 150 may detect the touch through the input device 120. Further, the processor 150 detects the location of the touch in operation 521. In this case, the determination unit 151 may detect the location of the touch. Here, the determination unit 151 may detect the detection time of the touch location, together with the touch location. Thereafter, in operation 523, the processor 150 determines whether the touch location is the same as the initial touch location. In this case, the analysis unit 153 may analyze the touch location. Further, the analysis unit 153 may determine whether the touch location is the same as the initial touch location. Here, when the touch location is within a set radius from the initial touch location, the analysis unit 153 may determine that the touch location is the same as the initial touch location.

Next, when the determination result in operation 523 shows that the touch location is the same as the initial touch location, the processor 150 returns to operation 513. Then, the processor 150 may repeatedly perform at least some of the operations 513 to 523. In this way, the processor 150 may update the touch event. Namely, as the number of repeated touches changes, the processor 150 may change the touch event.

Meanwhile, when the determination result in operation 523 shows that the touch location is not the same as the initial touch location, the processor 150 ends the procedure of the screen control method.

In cases where the initial touch location is within the main area 131, the touch may be repeated at the initial touch location within the main area 131. For example, the touch may be generated once within the main area 131 as illustrated in FIG. 23A. Alternatively, as illustrated in FIG. 24A, the touch may be repeatedly generated twice at the initial touch location within the main area 131.

Meanwhile, in cases where the initial touch location is within the edge area 133, the touch may be repeated at the initial touch location within the edge area 133. For example, the touch may be generated once within the edge area 133 as illustrated in FIG. 25A. Alternatively, the touch may be repeatedly generated twice at the initial touch location within the edge area 133 as illustrated in FIG. 26A.

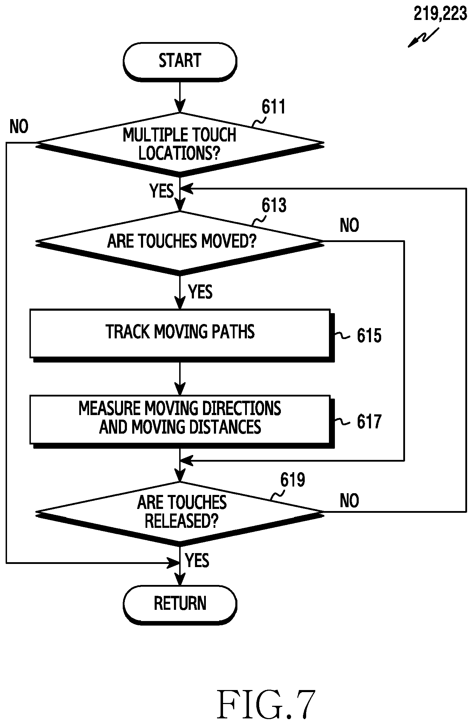

FIG. 7 is a flowchart illustrating a fourth example of the procedure of determining the touch event corresponding to the main area and the edge area in FIG. 3 according to an embodiment of the present disclosure. A touch event determination procedure when a touch moves from at least one of a plurality of touch locations as illustrated in FIGS. 27A and 27B, or 28A and 28B, will be described below.

Referring to FIG. 7, the touch event determination procedure, according to this embodiment of the present disclosure, starts by identifying a plurality of touch locations by the processor 150 in operation 611. In this case, the analysis unit 153 may identify the detection times of the touch locations. Further, the analysis unit 153 may detect the number of touch locations based on the detection times. Here, the analysis unit 153 may identify the plurality of touch locations based on the detection times.

Next, when the touches move, the processor 150 detects the movement of the touches in operation 613. In this case, the determination unit 151 may continue to detect the touch locations. Here, the determination unit 151 may detect the detection times of the touch locations, together with the touch locations. The analysis unit 153 may analyze the touch locations. Here, the analysis unit 153 may determine whether at least one of the touch locations changes as the detection times change. Further, when at least one of the touch locations changes, the analysis unit 153 may determine the movement of the touch.

Next, in operation 615, the processor 150 tracks the moving paths of the touches. In this case, the measurement unit 155 may track the moving paths of the touches. Here, the measurement unit 155 may track the change of the touch locations as the detection times change. The processor 150 may measure the moving directions and the moving distances of the touches in operation 617. In this case, the measurement unit 155 may measure the moving directions and the moving distances of the touches along the moving paths of the touches. In this way, the processor 150 may determine a touch event from the moving paths, the moving directions, and the moving distances of the touches.

Next, when the touches are released, the processor 150 detects the release of the touches in operation 619. The processor 150 ends the touch event determination procedure and returns to FIG. 3.

Meanwhile, when the release of the touches is not detected in operation 619, the processor 150 returns to operation 613. Then, the processor 150 may repeatedly perform at least some of the operations 613 to 619. In this way, the processor 150 may update the touch event. Namely, the processor 150 may change the touch event as at least one of the moving paths, the moving directions, and the moving distances of the touches changes.

In cases where the initial touch locations are within the main area 131, the touches may move from the main area 131. Here, the touches may move within the main area 131. For example, as illustrated in FIGS. 27A and 27B, the touch locations may move away from each other within the main area 131. Alternatively, although not illustrated, the touch locations may move close to each other within the main area 131.

Meanwhile, in cases where the initial touch locations are within the edge area 133, the touches may move from the edge area 133. Here, the touches may move within the edge area 133. For example, as illustrated in FIGS. 28A and 28B, the touch locations may move away from each other within the edge area 133. Alternatively, although not illustrated, the touch locations may move close to each other within the edge area 133.

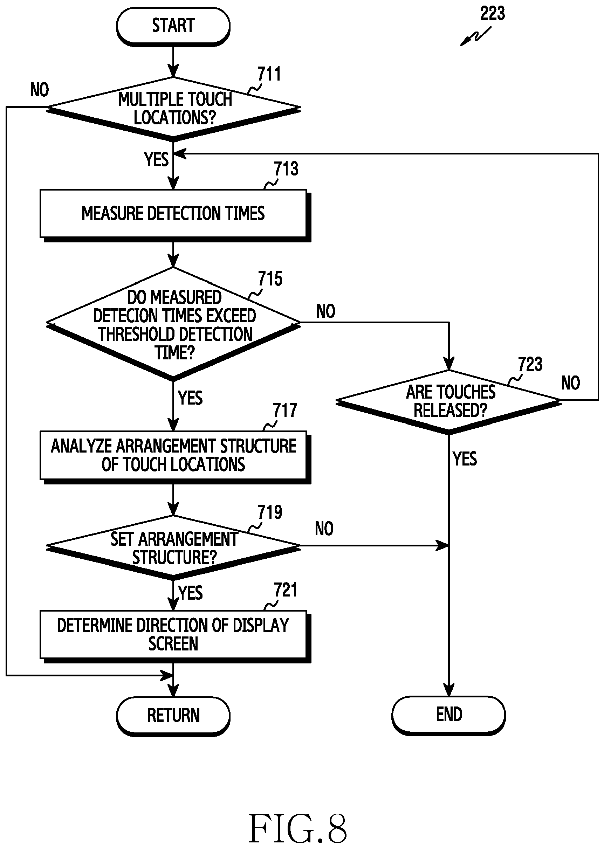

FIG. 8 is a flowchart illustrating a fifth example of the procedure of determining the touch event corresponding to the main area and the edge area in FIG. 3 according to an embodiment of the present disclosure. A touch event determination procedure when touches are maintained at a plurality of touch locations as illustrated in FIGS. 29A and 29B, or 30A and 30B, will be described below.

Referring to FIG. 8, the touch event determination procedure, according to this embodiment of the present disclosure, starts by identifying a plurality of touch locations by the processor 150 in operation 711. In this case, the analysis unit 153 may identify the detection times of the touch locations. Further, the analysis unit 153 may detect the number of touch locations based on the detection times. Here, the analysis unit 153 may identify the plurality of touch locations based on the detection times.

Next, the processor 150 measures the detection times of the touches in operation 713. In this case, the determination unit 151 may continue to detect the touch locations. Here, the determination unit 151 may detect the detection times of the touch locations, together with the touch locations. The analysis unit 153 may analyze the touch locations. Here, the analysis unit 153 may determine whether at least one of the touch locations changes as the detection times change. Further, when the touch locations do not change, the analysis unit 153 may determine that the touches are maintained at the same touch locations. Further, the measurement unit 155 may measure the detection times of the touches. Namely, the measurement unit 155 may measure the maintenance times of the touches from the change of the detection times at the same touch locations.

Next, the processor 150 compares the detection times of the touches with a threshold detection time in operation 715. Namely, the processor 150 determines whether the detection times of the touches exceed the threshold detection time. Here, the memory 140 may store the threshold detection time.

Next, when the determination result in operation 715 shows that the detection times of the touches do not exceed the threshold detection time, and the touches are released, the processor 150 detects the release of the touches in operation 723. Then, the processor 150 ends the procedure of the screen control method. If the release of the touches is not detected in operation 723, the processor 150 returns to operation 713. Then, the processor 150 may repeatedly perform at least some of the operations 713 to 723.

Meanwhile, when the determination result in operation 715 shows that the detection times of the touches exceed the threshold detection time, the processor 150 analyzes the arrangement structure of the touch locations in operation 717. Namely, the processor 150 analyzes the arrangement structure of the touch locations within the edge area 133. Thereafter, the processor 150 compares the arrangement structure of the touch locations with the set arrangement structure in operation 719. Namely, the processor 150 determines whether the arrangement structure of the touch locations is the same as the set arrangement structure. In this case, the memory 140 may store the set arrangement structure. For example, the set arrangement structure may include a right-hand grip structure and a left-hand grip structure. Here, the right-hand grip structure may refer to a case in which the user of the electronic device 100 grips the electronic device 100 with his/her right hand, and the left-hand grip structure may refer to a case in which the user of the electronic device 100 grips the electronic device 100 with his/her left hand.

Next, when the determination result in operation 719 shows that the arrangement structure of the touch locations is the same as the set arrangement structure, the processor 150 determines the direction of the display screen 310 in operation 721. Namely, the processor 150 may determine a touch event according to the arrangement structure of the touch locations. For example, when the arrangement structure of the touch locations is the same as the right-hand grip structure, the processor 150 may determine a touch event in response to the right-hand grip structure. Alternatively, when the arrangement structure of the touch locations is the same as the left-hand grip structure, the processor 150 may determine a touch event in response to the left-hand grip structure. Thereafter, the processor 150 ends the touch event determination procedure and returns to FIG. 3.

Meanwhile, when the determination result in operation 719 shows that the arrangement structure of the touch locations is not the same as the set arrangement structure, the processor 150 ends the procedure of the screen control method.

In cases where the initial touch locations are within the edge area 133, the touches may be maintained at the initial touch locations within the edge area 133. Here, at least three initial touch locations may be arranged in the edge area 133. For example, as illustrated in FIG. 29A, one of the initial touch locations may be arranged in the edge area 133 on the right side of the main area 131, and the rest of the initial touch locations may be arranged to be separated from each other in the edge area 133 on the left side of the main area 131. In this case, the processor 150 may determine that the arrangement structure of the initial touch locations is the same as the right-hand grip structure. Alternatively, as illustrated in FIG. 30A, one of the initial touch locations may be arranged in the edge area 133 on the left side of the main area 131, and the rest of the initial touch locations may be arranged to be separated from each other in the edge area 133 on the right side of the main area 131. In this case, the processor 150 may determine that the arrangement structure of the initial touch locations is the same as the left-hand grip structure.

In succession, the processor 150 controls the display screen 310 in operation 225. In this case, the processor 150 controls the display screen 310 in response to the touch event. Here, the processor 150 may control the display screen according to at least one of the touch location and the touch motion.

In cases where the initial touch location is within the main area 131, the processor 150 may control the display screen 310 according to the movement of the touch as illustrated in FIGS. 10A and 10B, 11A and 11B, or 12A and 12B. For example, as illustrated in FIG. 10B, the processor 150 may scroll up the list of received messages in units of items on the display screen 310. Alternatively, although not illustrated, the processor 150 may scroll down the list of received messages on the display screen 310. In another case, as illustrated in FIG. 11B, the processor 150 may select one of received messages and may display detailed contents of the selected message on the display screen 310. In yet another case, as illustrated in FIG. 12B, the processor 150 may select one of received messages and may make a call to the phone number for the selected message. Here, the processor 150 may display the outgoing call information on the display screen 310.

Meanwhile, in cases where the initial touch location is within the edge area 133, the processor 150 may control the display screen 310 according to the movement of the touch as illustrated in FIGS. 13A and 13B, 14A and 14B, 15A and 15B, 16A and 16B, 17A and 17B, or 18A and 18B.

For example, as illustrated in FIG. 13B, the processor 150 may scroll up the list of received messages on the display screen 310 to display the lower end portion of the received messages. Alternatively, although not illustrated, the processor 150 may scroll down the list of received messages on the display screen 310 to display the upper end portion of the received messages. Further, although not illustrated, the processor 150 may control the volume to correspond to the display screen 310. In another case, the processor 150 may execute a set function as illustrated in FIG. 14B. Here, the processor 150 may execute, for example, a camera function.

In yet another case, the processor 150 may execute the preceding function as illustrated in FIG. 15B. Here, the processor 150 may execute an image display function. In yet another case, the processor 150 may execute the next function as illustrated in FIG. 16B. Here, the processor 150 may execute an outgoing call function. In yet another case, as illustrated in FIG. 17B, the processor 150 may display an auxiliary panel in response to a function set according to the movement of a touch. Here, the processor 150 may display weather information on the auxiliary panel. In yet another case, as illustrated in FIG. 18B, the processor 150 may display an auxiliary panel in response to a function set according to the movement of a touch. Here, the processor 150 may display dictionary information on the auxiliary panel.

In cases where the initial touch location is within the main area 131, the processor 150 may control the display screen 310 according to the detection time of the touch as illustrated in FIGS. 19A and 19B, or 20A and 20B. For example, as illustrated in FIG. 19B, the processor 150 may select one of received messages and may display detailed contents of the selected message on the display screen 310. Alternatively, as illustrated in FIG. 20B, the processor 150 may select one of received messages and may display, on the display screen 310, an auxiliary window for processing the phone number for the selected received message.

Meanwhile, in cases where the initial touch location is within the edge area 133, the processor 150 may control the display screen 310 according to the detection time of the touch as illustrated in FIGS. 21A and 21B, or 22A and 22B. For example, as illustrated in FIG. 21B, the processor 150 may select one of received messages and may display, on the display screen 310, an auxiliary window for storing the phone number for the selected message. Alternatively, the processor 150 may execute a set function as illustrated in FIG. 22B. Here, the processor 150 may execute a search function. Although not illustrated, the processor 150 may also execute a refresh function.

In cases where the initial touch location is within the main area 131, the processor 150 may control the display screen 310 according to the number of repeated touches as illustrated in FIGS. 23A and 23B, or 24A and 24B. For example, as illustrated in FIG. 23B, the processor 150 may display the list of displayable images on the display screen 310. Alternatively, as illustrated in FIG. 24B, the processor 150 may display a zoomed-in image on the display screen 310.

Meanwhile, in cases where the initial touch location is within the edge area 133, the processor 150 may control the display screen 310 according to the number of repeated touches as illustrated in FIGS. 25A and 25B, or 26A and 26B. For example, as illustrated in FIG. 25B, the processor 150 may display a rotated and zoomed-in image on the display screen 310. Alternatively, as illustrated in FIG. 26B, the processor 150 may edit an image on the display screen 310. In another case, although not illustrated, the processor 150 may execute a set function. Here, the processor 150 may execute a search function. Alternatively, the processor 150 may execute a refresh function.

In cases where initial touch locations are within the main area 131, the processor 150 may control the display screen 310 according to the movement of the touches as illustrated in FIGS. 27A and 27B. For example, as illustrated in FIG. 27B, the processor 150 may display a zoomed-in image on the display screen 310. Alternatively, although not illustrated, the processor 150 may display a zoomed-out image on the display screen 310.

Meanwhile, in cases where initial touch locations are within the edge area 133, the processor 150 may control the display screen 310 according to the movement of the touches as illustrated in FIGS. 28A and 28B. For example, as illustrated in FIG. 28B, the processor 150 may adjust the brightness of an image on the display screen 310.

In cases where initial touch locations are within the edge area 133, the processor 150 may control the display screen 310 according to the arrangement structure of the touch locations as illustrated in FIGS. 29A and 29B, or 30A and 30B. For example, as illustrated in FIG. 29B, the processor 150 may display a numeric keypad on the right side of the display screen 310. Alternatively, as illustrated in FIG. 30B, the processor 150 may display a numeric keypad on the left side of the display screen 310.

Finally, in operation 227, the processor 150 determines whether to complete the control of the display screen 310. When it is determined that the control of the display screen 310 has to be completed in operation 227, the processor 150 ends the procedure of the screen control method. In this case, the processor 150 may end the procedure of the screen control method when a user input for deactivating the display 130 or a user input for turning off the electronic device 100 is detected. Here, the processor 150 may deactivate both the main area 131 and the edge area 133. Alternatively, the processor 150 may deactivate the main area 131 and may continually activate the edge area 133. Further, the processor 150 may deactivate the input device 120 to correspond to the main area 131 and the edge area 133. Alternatively, the processor 150 may deactivate the input device 120 to correspond to the main area 131 and may continually activate the input device 120 to correspond to the edge area 133.

Meanwhile, when the determination result in operation 227 shows that the control of the display screen 310 does not need to be completed, the processor 150 returns to operation 211. Thereafter, the processor 150 may repeatedly perform at least some of the operations 211 to 227.

Meanwhile, although the examples in which the processor 150 controls the display screen 310 in response to the release of the touch have been disclosed in the above-described embodiments, the present disclosure is not limited thereto. Namely, the processor 150 may control the display screen 310 while the touch is being released. In this case, the processor 150 may control the display screen 310 according to one of the touch location and the touch motion. Here, the processor 150 may control the display screen 310 according to at least one of the touch location and the touch motion. For example, the processor 150 may control the display screen 310 according to the movement of the touch or the detection time of the touch.

According to the present disclosure, the display 130 of the electronic device 100 includes not only the main area 131 but also the edge area 133. This can create a touch motion that is generated from not only the main area 131 but also from the edge area 133 in the electronic device 100. Accordingly, the electronic device 100 can provide various interactions for various touch motions. Namely, the electronic device 100 can control the display screen in response to various touch motions. Therefore, the electronic device 100 can enhance use efficiency user convenience thereof.

While the present disclosure has been shown and described with reference to various embodiments thereof, it will be understood by those skilled in the art that various changes in form and details may be made therein without departing from the scope of the present disclosure as defined by the appended claims.

## Claims

1. A method of operating an electronic device, the method comprising:
displaying a first display screen on a touch screen, the touch screen including a main area having a flat surface and an edge area having a curved surface, the edge area being adjacent to an edge of the main area;
detecting a touch which moves from the curved surface of the edge area to the flat surface of the main area while displaying the first display screen; and
in response to detecting the touch, displaying a second display screen on the touch screen, wherein the edge area does not comprise any content.

2. The method of claim 1, wherein the displaying of the second display screen comprises displaying the second display screen including a second content and at least a portion of the first display screen including a first content.

3. The method of claim 2, wherein the second display screen is superimposed on at least the portion of the first display screen.

4. The method of claim 2, wherein a layer including the first display screen is overlaid with a layer including the second display screen.

5. The method of claim 1, wherein the second display screen includes one or more executable objects.

6. The method of claim 1, wherein the touch begins in a right edge area of the touch screen, and after the touch is dragged leftward from the right edge area, the touch is released in the main area.

7. The method of claim 1, wherein the displaying of the second display screen on the touch screen comprises displaying the second display screen which is differently displayed according to a location at which the touch begins in the edge area and a direction in which the touch moves.

8. An electric device comprising:
a touch screen including a main area having a flat surface and an edge area having a curved surface, the edge area being adjacent to an edge of the main area; and
at least one processor configured to:
control the touch screen to display a first display screen,
detect a touch which moves from the curved surface of the edge area to the flat surface of the main area while displaying the first display screen, and
in response to detecting the touch, control the touch screen to display a second display screen, wherein the edge area does not comprise any content.

9. The electronic device of claim 8, wherein the at least one processor is further configured to control the touch screen to display the second display screen including a second content at least a portion of the first display screen including a first content.

10. The electronic device of claim 9, wherein the second display screen is superimposed on at least the portion of the first display screen.

11. The electronic device of claim 9, wherein a layer including the first display screen is overlaid on a layer including the second display screen.

12. The electronic device of claim 8, wherein the second display screen includes one or more executable objects.

13. The electronic device of claim 8, wherein the touch begins in a right edge area of the touch screen, and after the touch is dragged leftward from the right edge area, the touch is released in the main area.

14. The electronic device of claim 8, wherein the at least one processor is further configured to control the touch screen to display the second display screen which is differently displayed according to a location at which the touch begins in the edge area and a direction in which the touch moves.

## Patentansprüche

1. Verfahren zum Betreiben einer elektronischen Vorrichtung, wobei das Verfahren Folgendes umfasst:
Anzeigen eines ersten Anzeigebildschirms auf einem Touchscreen, wobei der Touchscreen einen Hauptbereich mit einer ebenen Fläche und einen Kantenbereich mit einer gebogenen Fläche einschließt, wobei der Kantenbereich an eine Kante des Hauptbereichs angrenzt;
Erkennen einer Berührung, die sich von der gebogenen Fläche des Kantenbereichs zu der ebenen Fläche des Hauptbereichs bewegt, während der erste Anzeigebildschirm angezeigt wird; und
als Antwort auf das Erkennen der Berührung, Anzeigen eines zweiten Anzeigebildschirms auf dem Touchscreen, wobei der Kantenbereich keinen Inhalt umfasst.

2. Verfahren nach Anspruch 1, wobei das Anzeigen des zweiten Anzeigebildschirms das Anzeigen des zweiten Anzeigebildschirms, einschließlich eines zweiten Inhalts, und mindestens eines Teils des ersten Anzeigebildschirms, einschließlich eines ersten Inhalts, umfasst.

3. Verfahren nach Anspruch 2, wobei der zweite Anzeigebildschirm auf mindestens dem Teil des ersten Anzeigebildschirms überlagert ist.

4. Verfahren nach Anspruch 2, wobei eine Schicht, einschließlich des ersten Anzeigebildschirms mit einer Schicht, einschließlich des zweiten Anzeigebildschirms überlagert ist.

5. Verfahren nach Anspruch 1, wobei der zweite Anzeigebildschirm ein oder mehrere ausführbare Objekte einschließt.

6. Verfahren nach Anspruch 1, wobei die Berührung in einem rechten Kantenbereich des Touchscreens beginnt, und nachdem die Berührung von dem rechten Kantenbereich nach links gezogen wird, die Berührung in dem Hauptbereich freigegeben wird.

7. Verfahren nach Anspruch 1, wobei das Anzeigen des zweiten Anzeigebildschirms auf dem Touchscreen das Anzeigen des zweiten Anzeigebildschirms umfasst, der gemäß einer Position, an der die Berührung in dem Kantenbereich beginnt, und einer Richtung, in die sich die Berührung bewegt, anders angezeigt wird.

8. Elektrische Vorrichtung, umfassend:
einen Touchscreen, einschließlich eines Hauptbereichs mit einer ebenen Fläche und einem Kantenbereich mit einer gebogenen Fläche, wobei der Kantenbereich an eine Kante des Hauptbereichs angrenzt; und wobei mindestens ein Prozessor für Folgendes konfiguriert ist:
Steuern des Touchscreens, um einen ersten Anzeigebildschirm anzuzeigen,
Erkennen einer Berührung, die sich von der gebogenen Fläche des Kantenbereichs zu der ebenen Fläche des Hauptbereichs bewegt, während der erste Anzeigebildschirm angezeigt wird, und
als Antwort auf das Erkennen der Berührung, Steuern des Touchscreens, um einen zweiten Anzeigebildschirm anzuzeigen, wobei der Kantenbereich keinen Inhalt umfasst.

9. Elektronische Vorrichtung nach Anspruch 8, wobei der mindestens eine Prozessor ferner zum Steuern des Touchscreens konfiguriert ist, um den zweiten Anzeigebildschirm, einschließlich eines zweiten Inhalts, und mindestens einen Teil des ersten Anzeigebildschirms, einschließlich eines ersten Inhalts, anzuzeigen.

10. Elektronische Vorrichtung nach Anspruch 9, wobei der zweite Anzeigebildschirm auf mindestens dem Teil des ersten Anzeigebildschirms überlagert ist.

11. Elektronische Vorrichtung nach Anspruch 9, wobei eine Schicht, einschließlich des ersten Anzeigebildschirms auf einer Schicht, einschließlich des zweiten Anzeigebildschirms überlagert ist.

12. Elektronische Vorrichtung nach Anspruch 8, wobei der zweite Anzeigebildschirm ein oder mehrere ausführbare Objekte einschließt.

13. Elektronische Vorrichtung nach Anspruch 8, wobei die Berührung in einem rechten Kantenbereich des Touchscreens beginnt, und nachdem die Berührung von dem rechten Kantenbereich nach links gezogen wird, die Berührung in dem Hauptbereich freigegeben wird.

14. Elektronische Vorrichtung nach Anspruch 8, wobei der mindestens eine Prozessor ferner zum Steuern des Touchscreens konfiguriert ist, um den zweiten Anzeigebildschirm anzuzeigen, der gemäß einer Position, an der die Berührung in dem Kantenbereich beginnt, und einer Richtung, in die sich die Berührung bewegt, anders angezeigt wird.

## Revendications

1. Procédé de fonctionnement d'un dispositif électronique, le procédé comprenant :
afficher un premier écran d'affichage sur un écran tactile, l'écran tactile comprenant une zone principale ayant une surface plate et une zone de bord ayant une surface incurvée, la zone de bord étant adjacente à un bord de la zone principale ;
détecter un toucher qui se déplace de la surface incurvée de la zone de bord à la surface plate de la zone principale tout en affichant le premier écran d'affichage ; et
en réponse à la détection du toucher, afficher un deuxième écran d'affichage sur l'écran tactile, où la zone de bord ne comprend aucun contenu.

2. Procédé selon la revendication 1, où l'affichage du deuxième écran d'affichage comprend l'affichage du deuxième écran d'affichage comprenant un deuxième contenu et au moins une partie du premier écran d'affichage comprenant un premier contenu.

3. Procédé selon la revendication 2, où le deuxième écran d'affichage est superposé à au moins la partie du premier écran d'affichage.

4. Procédé selon la revendication 2, où une couche comprenant le premier écran d'affichage est recouverte d'une couche comprenant le deuxième écran d'affichage.

5. Procédé selon la revendication 1, où le deuxième écran d'affichage comprend un ou plusieurs objets exécutables.

6. Procédé selon la revendication 1, où le toucher commence dans une zone de bord droite de l'écran tactile, et après que le toucher a été glissé vers la gauche depuis la zone de bord droite, le toucher est relâché dans la zone principale.

7. Procédé selon la revendication 1, où l'affichage du deuxième écran d'affichage sur l'écran tactile comprend l'affichage du deuxième écran d'affichage qui est affiché différemment selon un emplacement auquel le toucher commence dans la zone de bord et une direction dans laquelle le toucher se déplace.

8. Dispositif électrique comprenant :
un écran tactile comprenant une zone principale ayant une surface plate et une zone de bord ayant une surface incurvée, la zone de bord étant adjacente à un bord de la zone principale ; et au moins un processeur configuré pour :
commander l'écran tactile pour afficher un premier écran d'affichage,
détecter un toucher qui se déplace de la surface incurvée de la zone de bord à la surface plate de la zone principale lors de l'affichage du premier écran d'affichage, et
en réponse à la détection du toucher, contrôler l'écran tactile pour afficher un deuxième écran d'affichage, où la zone de bord ne comprend aucun contenu.

9. Dispositif électronique selon la revendication 8, où l'au moins un processeur est en outre configuré pour commander l'écran tactile pour afficher le deuxième écran d'affichage comprenant un deuxième contenu, au moins une partie du premier écran d'affichage comprenant un premier contenu.

10. Dispositif électronique selon la revendication 9, où le deuxième écran d'affichage est superposé à au moins la partie du premier écran d'affichage.

11. Dispositif électronique selon la revendication 9, où une couche comprenant le premier écran d'affichage est superposée sur une couche comprenant le deuxième écran d'affichage.

12. Dispositif électronique selon la revendication 8, où le deuxième écran d'affichage comprend un ou plusieurs objets exécutables.

13. Dispositif électronique selon la revendication 8, où le toucher commence dans une zone de bord droite de l'écran tactile, et après que le toucher a été glissé vers la gauche depuis la zone de bord droite, le toucher est relâché dans la zone principale.

14. Dispositif électronique selon la revendication 8, où l'au moins un processeur est en outre configuré pour commander l'écran tactile pour afficher le deuxième écran d'affichage qui est affiché différemment selon un emplacement auquel le toucher commence dans la zone de bord et une direction dans laquelle le toucher se déplace.
